# FASCICULE DE BREVET EUROPEEN

(11) **EP 3 150 881 B1**
(45) Date de publication et mention de la délivrance du brevet: **25.04.2018**
(21) Numéro de dépôt: 16189143.7
(22) Date de dépôt: 16.09.2016
(51) Int. Cl.: F16F 15/123, F16F 15/129

(54) **DISPOSITIF DE TRANSMISSION DE COUPLE, NOTAMMENT POUR VEHICULE AUTOMOBILE**
VORRICHTUNG ZUR ÜBERTRAGUNG DES MOTORDREHMOMENTS, INSBESONDERE FÜR KRAFTFAHRZEUGE
TORQUE TRANSMISSION DEVICE, IN PARTICULAR FOR A MOTOR VEHICLE

(30) Priorité: 18.09.2015 FR 1558813
(43) Date de publication de la demande: 05.04.2017
(73) Titulaire: Valeo Embrayages, 80009 Amiens Cedex 2 (FR)
(72) Inventeur: DAEL, Dominique, 76870 GAILLEFONTAINE (FR)
(74) Mandataire: Cardon, Nicolas

(56) Documents cités:
- FR-A1- 2 918 431

## Description

La présente invention concerne un dispositif de transmission de couple appartenant par exemple à un dispositif d'embrayage, tel qu'un embrayage à friction, notamment pour véhicule automobile.

Le document FR 2 918 432 divulgue un dispositif de transmission de couple, notamment pour véhicule automobile, comportant un élément d'entrée de couple, destiné à être couplé à un vilebrequin et comprenant une première et une seconde rondelles de guidage, un voile annulaire, un élément de sortie de couple comprenant un moyeu destiné à être couplé à un arbre d'entrée d'une boîte de vitesses, le voile étant apte à coulisser selon son axe par rapport au moyeu. Le dispositif comporte en outre un amortisseur primaire agencé entre l'élément d'entrée de couple et le voile et un amortisseur secondaire ou pré-amortisseur agencé entre le voile et l'élément de sortie de couple. Des moyens de friction permettent de générer un couple d'hystérésis lors de la rotation du voile par rapport à l'élément d'entrée de couple, lesdits moyens de friction comportant une rondelle d'application montée axialement entre le voile et la première rondelle de guidage, au moins un organe élastique apte à exercer un effort axial et monté axialement entre la rondelle d'application et la première rondelle de guidage, et une rondelle d'hystérésis variable montée axialement entre la seconde rondelle de guidage et le voile, l'organe élastique tendant à repousser la rondelle d'application et le voile en direction de la rondelle d'hystérésis variable de manière à ce que ladite rondelle d'hystérésis variable génère un couple d'hystérésis par frottement. La rondelle d'hystérésis variable et la rondelle d'application sont couplées en rotation l'une à l'autre.

La rondelle d'hystérésis variable est formée à partir d'une tôle et comporte des rebords en forme de coins, repliés axialement et formant des butées aptes à coopérer avec des butées complémentaires du voile, de manière à réaliser un couplage en rotation du voile, de la rondelle d'hystérésis variable et de la rondelle d'application, lorsque le débattement du voile par rapport à l'élément d'entrée de couple dépasse une plage angulaire déterminée et de manière à découpler le voile, d'une part, et la rondelle d'hystérésis variable et la rondelle d'application, d'autre part, lorsque ledit débattement est situé dans ladite plage angulaire déterminée. En outre le document FR 2 918 431 divulgue aussi un dispositif de transmission de couple selon le préambule de la revendication 1. Les rebords sont particulièrement fragiles et la rondelle d'hystérésis est relativement difficile à réaliser par emboutissage, du fait de la présence desdits rebords.

L'invention vise à remédier à ces inconvénients, de façon simple, efficace et économique.

A cet effet, l'invention concerne un dispositif de transmission de couple, notamment pour véhicule automobile, comportant un élément d'entrée de couple, destiné à être couplé à un vilebrequin et comprenant une première et une seconde rondelles de guidage, un voile annulaire, un élément de sortie de couple comprenant un moyeu destiné à être couplé à un arbre d'entrée d'une boîte de vitesses, le voile étant apte à coulisser selon son axe par rapport au moyeu, un amortisseur primaire agencé entre l'élément d'entrée de couple et le voile et un amortisseur secondaire ou pré-amortisseur agencé entre le voile et l'élément de sortie de couple, des moyens de friction aptes à générer un couple d'hystérésis lors de la rotation du voile par rapport à l'élément d'entrée de couple, lesdits moyens de friction comportant une rondelle d'application montée axialement entre le voile et la première rondelle de guidage, une rondelle d'hystérésis variable montée axialement entre la seconde rondelle de guidage et le voile, au moins un organe élastique tendant à repousser la rondelle d'application et/ou le voile en direction de la rondelle d'hystérésis variable de manière à ce que ladite rondelle d'hystérésis variable génère un couple d'hystérésis par frottement, la rondelle d'hystérésis variable et la rondelle d'application étant couplées en rotation l'une à l'autre, caractérisé en ce que le pré-amortisseur comporte au moins une rondelle de guidage auxiliaire couplée en rotation avec le voile, ladite rondelle de guidage auxiliaire comportant une butée apte à coopérer avec une butée complémentaire de la rondelle d'application de manière à réaliser un couplage en rotation du voile, de la rondelle d'hystérésis variable et de la rondelle d'application, lorsque le débattement du voile par rapport à l'élément d'entrée de couple dépasse une plage angulaire déterminée et de manière à découpler le voile, d'une part, et la rondelle d'hystérésis variable et la rondelle d'application, d'autre part, lorsque ledit débattement est situé dans ladite plage angulaire déterminée.

L'invention propose ainsi une structure alternative permettant de coupler en rotation la rondelle d'hystérésis variable et la rondelle d'application au voile, au-delà de la plage angulaire déterminée. Cette nouvelle structure ne fait pas intervenir de rondelle d'hystérésis présentant des rebords en forme de coin, rendant la solution proposée moins fragile et plus facilement réalisable que dans l'art antérieur, sans nécessiter l'ajout d'éléments supplémentaires.

Le dispositif selon l'invention peut également comporter l'une ou plusieurs des caractéristiques suivantes :
- le pré-amortisseur comporte une première et une seconde rondelles de guidage auxiliaires couplées en rotation avec le voile annulaire, un voile annulaire auxiliaire monté axialement entre les rondelles de guidage auxiliaires et apte à être couplé en rotation avec l'élément de sortie de couple, et au moins un organe élastique monté entre les rondelles de guidage auxiliaires et le voile auxiliaire et apte à s'opposer à la rotation des rondelles de guidage auxiliaires par rapport au voile auxiliaire,
- le dispositif comporte un premier palier couplé en rotation à la première rondelle de guidage et un second palier couplé en rotation à la seconde rondelle de guidage, le moyeu étant maintenu en appui et recentré entre les premier et second paliers,
- le moyeu est maintenu en appui contre le premier palier et contre le second palier par au moins une première rondelle élastique, montée entre l'une des rondelles de guidage et l'un desdits paliers, et apte à exercer un effort axial tendant à plaquer ledit palier sur le moyeu,

- le dispositif comporte une deuxième rondelle élastique disposée axialement entre l'une des rondelles de guidage et la rondelle d'application, apte à exercer un effort axial sur la rondelle d'application,
- les première et seconde rondelles de guidage sont montées pivotantes autour du moyeu, par l'intermédiaire des premier et second paliers,
- les premier et second paliers sont réalisés en matière plastique, éventuellement renforcée de fibres,
- la rondelle d'application est réalisée en matière plastique, éventuellement renforcée de fibres,
- la rondelle d'application comporte des logements dans lesquels sont engagés, avec un jeu angulaire, des plots d'au moins une rondelle de guidage du pré-amortisseur, de façon à former les butées complémentaires,
- la rondelle d'application comporte des évidements dont au moins un comporte des moyens d'encliquetage se présentant sous la forme de crochets ou d'ergots,
- la rondelle d'application comporte une surface de frottement annulaire, s'étendant par exemple radialement, tournée vers la première rondelle de guidage et opposée à la rondelle d'hystérésis variable,
- la deuxième rondelle élastique est montée en appui entre la première rondelle de guidage de l'amortisseur primaire et la surface radiale de la rondelle d'application,
- la deuxième rondelle élastique est de préférence en acier à ressort et est solidarisée en rotation avec la première rondelle de guidage de l'amortisseur primaire, par exemple par coopération de pattes et encoches complémentaires,
- la surface de frottement annulaire comporte une partie métallique, par exemple un insert annulaire métallique, fixe par rapport à la rondelle d'application,
- la rondelle d'hystérésis variable est réalisée par exemple à partir d'une tôle métallique, et comporte une partie annulaire sensiblement radiale, à partir de laquelle huit pattes s'étendent axialement en direction de la rondelle d'application et à partir de laquelle quatre pattes s'étendent radialement vers l'extérieur,
- certaines desdites pattes comportent des encoches et sont engagées dans les évidements de la rondelle d'application de sorte que les crochets ou les ergots des moyens d'encliquetage précités viennent s'encliqueter dans lesdites encoches,
- une rondelle d'appui, réalisée par exemple en métal, est intercalée axialement entre la rondelle d'hystérésis variable, plus particulièrement sa partie annulaire, et la périphérie interne du voile annulaire,
- la rondelle d'appui est rendue solidaire en rotation de la seconde rondelle de guidage, par l'intermédiaire de pattes de la rondelle d'appui qui sont montées dans des lumières de forme complémentaire de la seconde rondelle de guidage,
- une troisième rondelle élastique est montée en appui entre la première rondelle de guidage de l'amortisseur primaire et une rondelle de guidage du pré-amortisseur,
- la troisième rondelle élastique est solidarisée en rotation avec la première rondelle de guidage de l'amortisseur primaire, par exemple par coopération de pattes radiales et encoches complémentaires,
- le dispositif comporte une première et une seconde rondelles de frottement aptes à être couplées en rotation avec le voile auxiliaire du pré-amortisseur,
- la première rondelle de frottement est de préférence en acier et comporte une partie annulaire radiale à partir de laquelle des pattes s'étendent axialement et sont engagées dans des encoches du voile auxiliaire du pré-amortisseur, de manière à pouvoir réaliser un couplage en rotation de la première rondelle de frottement et du voile auxiliaire,
- la partie annulaire de la première rondelle de frottement comporte des encoches à sa périphérie externe.
- la seconde rondelle de frottement est réalisée en matière plastique, éventuellement renforcée de fibres,
- la seconde rondelle de frottement comporte une partie annulaire radiale à partir de laquelle des plots s'étendent axialement de façon à venir s'engager dans les encoches de la première rondelle de frottement de façon à coupler en rotation les première et seconde rondelles de frottement,
- une quatrième rondelle élastique est montée en appui entre la première rondelle de guidage de l'amortisseur primaire et la seconde rondelle de frottement,
- la quatrième rondelle élastique est solidarisée en rotation avec la première rondelle de guidage, par exemple par coopération de pattes radiales et encoches complémentaires,
- l'amortisseur primaire comporte, d'une part, des moyens d'amortissement à activation dite immédiate, qui sont activés dès que débute le débattement angulaire entre les rondelles de guidage et le voile, et, d'autre part, des moyens d'amortissement à activation dite conditionnelle, qui sont activés ici lorsque le débattement angulaire entre les rondelles de guidage et le voile dépasse un angle seuil prédéterminé à partir d'une position de repos, dit angle seuil de l'amortisseur primaire,
- les moyens d'amortissement de l'amortisseur primaire comportent des organes élastiques à action circonférentielle, tels que des ressorts hélicoïdaux, logés dans des fenêtres des rondelles de guidage et dans des fenêtres du voile annulaire,
- les moyens d'amortissement à activation immédiate comportent des organes élastiques d'un premier groupe, dits organes élastiques à activation immédiate, logés sans jeu circonférentiel dans les fenêtres des rondelles de guidage et dans les fenêtres du voile annulaire,
- les moyens d'amortissement à activation conditionnelle comportent des organes élastiques d'un second groupe, dits organes élastiques à activation conditionnelle, logés sans jeu circonférentiel dans les fenêtres des rondelles de guidage et avec un jeu circonférentiel prédéterminé dans les fenêtres du voile annulaire,
- les organes élastiques appartenant aux moyens d'amortissement à activation conditionnelle sont logés avec jeu entre les pattes s'étendant radialement vers l'extérieur de la rondelle d'hystérésis variable,
- l'élément d'entrée de couple comporte un disque de friction,
- le dispositif de transmission de couple appartient à un dispositif d'embrayage, tel par exemple qu'un embrayage à friction, notamment pour véhicule automobile,
- le moyeu est réalisé en métal,
- le moyeu comporte des cannelures internes s'étendant axialement, aptes à être couplées à des cannelures complémentaires d'un arbre d'entrée d'une boîte de vitesses,
- les rondelles de guidage sont en métal,
- les rondelles de guidage sont couplées en rotation l'une à l'autre par l'intermédiaire de colonnettes,
- le disque de friction est fixé sur l'une des rondelles de guidage par l'intermédiaire de rivets,
- le disque de friction comporte un support annulaire dont la périphérie radialement interne est fixée à l'une des rondelles de guidage, et des garnitures annulaires montées de part et d'autre du support, lesdites garnitures étant fixées au support, par exemple par l'intermédiaire de rivets,
- le voile annulaire est réalisé en métal,
- le voile annulaire comporte, en périphérie radialement interne, une denture qui engrène, avec un jeu circonférentiel déterminé, avec une denture correspondante externe du moyeu,
- la denture interne du voile forme des saillies sensiblement radiales destinées à coopérer avec des évidements complémentaires externes du moyeu de manière à réaliser un engrènement,
- le pré-amortisseur comporte des organes élastiques, tels par exemple que des ressorts de compression droits,
- les rondelles de guidage auxiliaires du pré-amortisseur sont réalisées en matière plastique, éventuellement renforcée de fibres,
- le voile auxiliaire du pré-amortisseur comporte, à sa périphérie radialement interne, des moyens de couplage en rotation aptes à coopérer avec le moyeu, par exemple avec une cannelure externe du moyeu, de manière à assurer un couplage en rotation,
- le premier palier est solidarisé en rotation avec l'une des rondelles de guidage à l'aide de doigts axiaux coopérant par encliquetage avec un contour interne cranté complémentaire de ladite rondelle de guidage,
- le premier palier comporte une surface de frottement radiale, apte à venir en appui sur un épaulement radial du moyeu,
- le second palier est solidarisé en rotation avec l'une des rondelles de guidage à l'aide de doigts coopérant avec un contour cranté complémentaire de la seconde rondelle de guidage,
- le second palier comporte une surface de frottement tronconique apte à venir en appui sur une surface tronconique du moyeu,
- chaque rondelle élastique est une rondelle de compression élastiquement déformable, apte à exercer un effort axial,
- le dispositif est agencé de manière à ce que, lors d'une première phase de fonctionnement, des frottements immédiats sont générés entre le moyeu et le premier palier, entre le moyeu et le second palier, et conditionnelle à partir d'une plage angulaire déterminée, entre la première rondelle de frottement et la première rondelle de guidage auxiliaire, et entre la seconde rondelle de frottement et la quatrième rondelle élastique,
- le dispositif est agencé de manière à ce que, lors d'une deuxième phase de fonctionnement, des frottements sont générés entre le moyeu et le premier palier, entre le moyeu et le second palier, entre le voile et la rondelle d'appui, entre la première rondelle de guidage auxiliaire et la troisième rondelle élastique, et entre la seconde rondelle de frottement et la quatrième rondelle élastique,
- le dispositif est agencé de manière à ce que, lors d'une troisième phase de fonctionnement, des frottements sont générés entre le moyeu et le premier palier, entre le moyeu et le second palier, entre le voile et la rondelle d'appui, entre la première rondelle de guidage auxiliaire et la troisième rondelle élastique, entre la seconde rondelle de frottement et la quatrième rondelle élastique, entre la rondelle d'hystérésis variable et la seconde rondelle de guidage, entre la rondelle d'hystérésis variable et la rondelle d'appui, et entre la rondelle d'application et la deuxième rondelle élastique.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en coupe axiale du dispositif selon une forme de réalisation de l'invention,
- la figure 2 est une vue éclatée, en perspective, du dispositif,
- la figure 3 est une vue de face, avec arrachage partiel, d'une partie du dispositif,

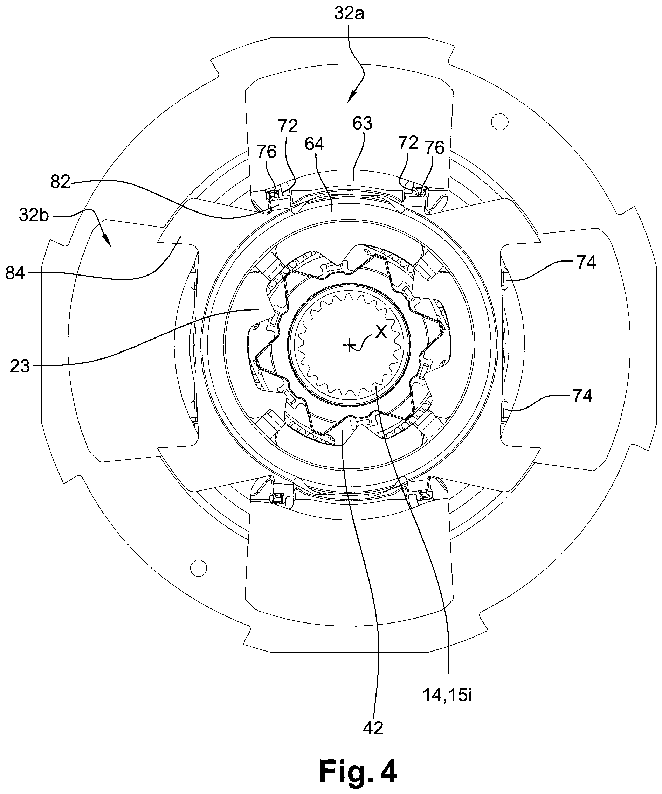

- la figure 4 est une vue de face d'une partie du dispositif,
- la figure 5 est une vue éclatée, en perspective, d'une partie du dispositif,

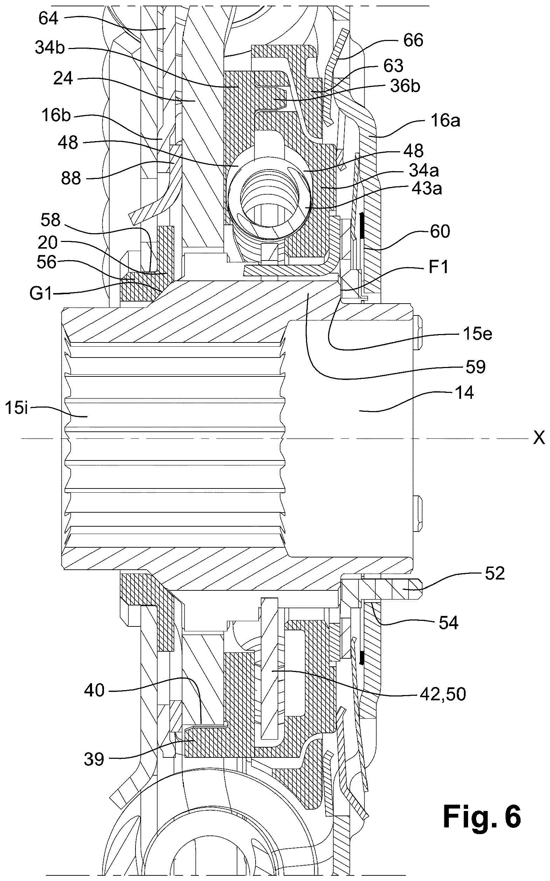

- la figure 6 est une vue en coupe axiale d'une partie du dispositif,

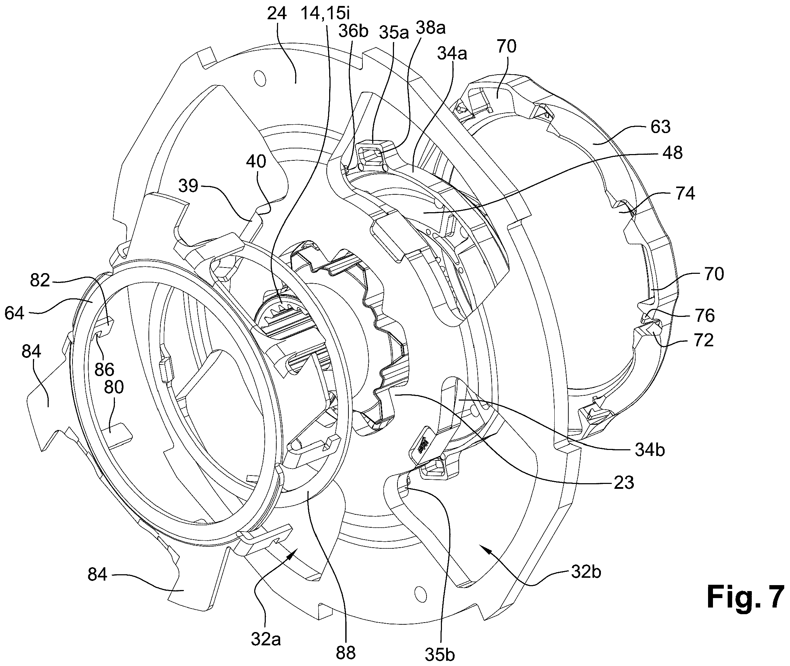

- la figure 7 est une vue éclatée, en perspective, d'une partie du dispositif,
- la figure 8 est une vue de face d'une partie du dispositif,

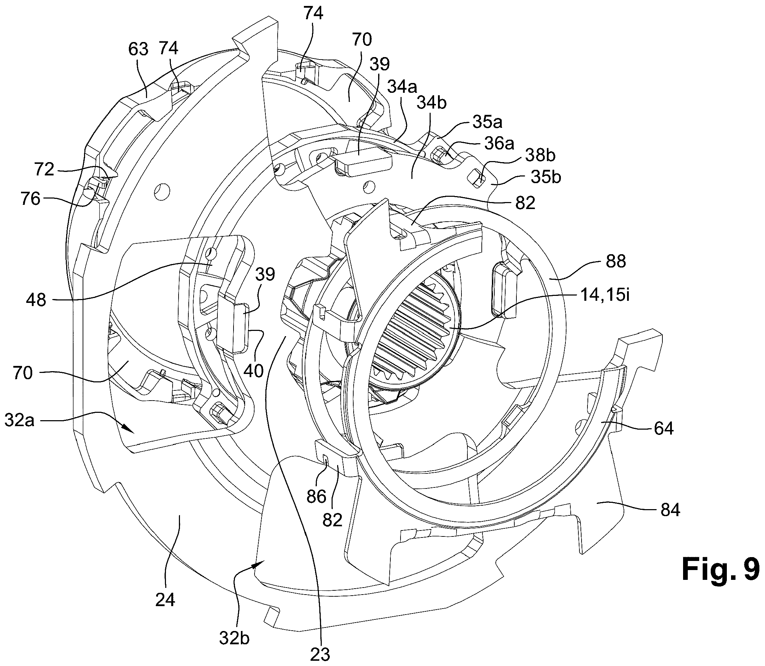

- la figure 9 est une vue éclatée, en perspective et avec arrachage partiel, d'une partie du dispositif,

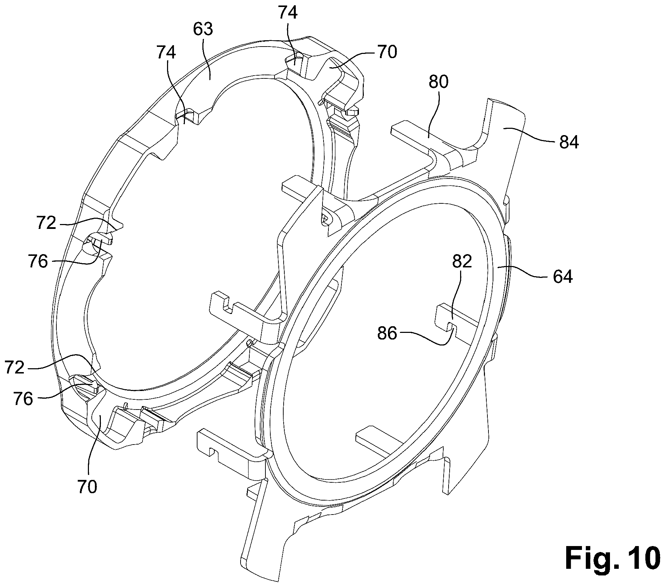

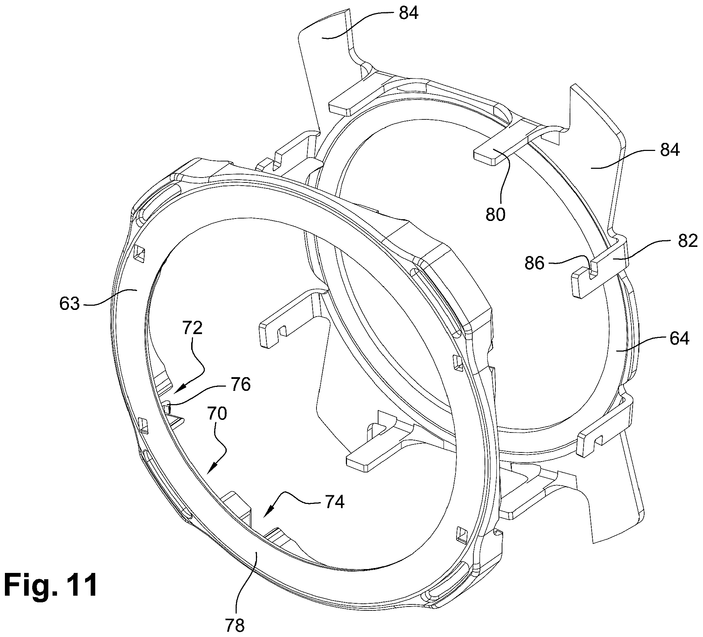

- les figures 10 et 11 sont des vues en perspective de la rondelle d'application et de la rondelle d'hystérésis variable,

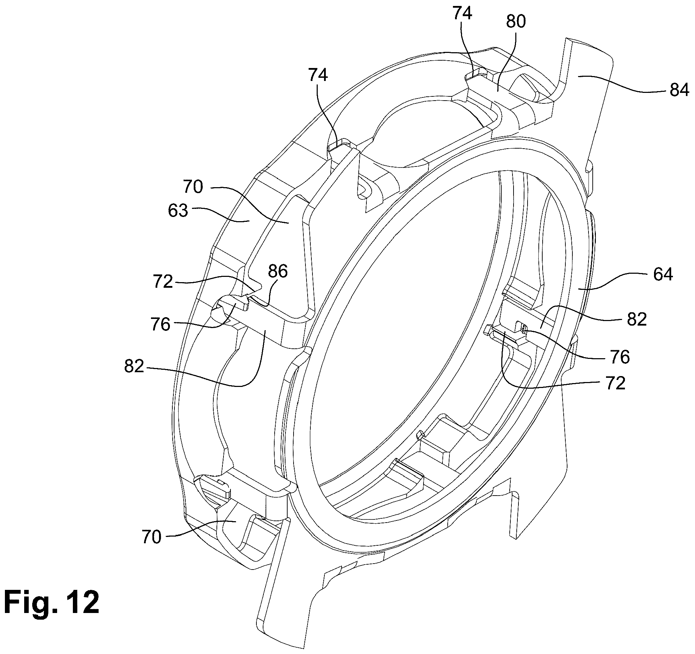

- la figure 12 est une vue en perspective représentant l'assemblage de la rondelle d'application et de la rondelle d'hystérésis variable,

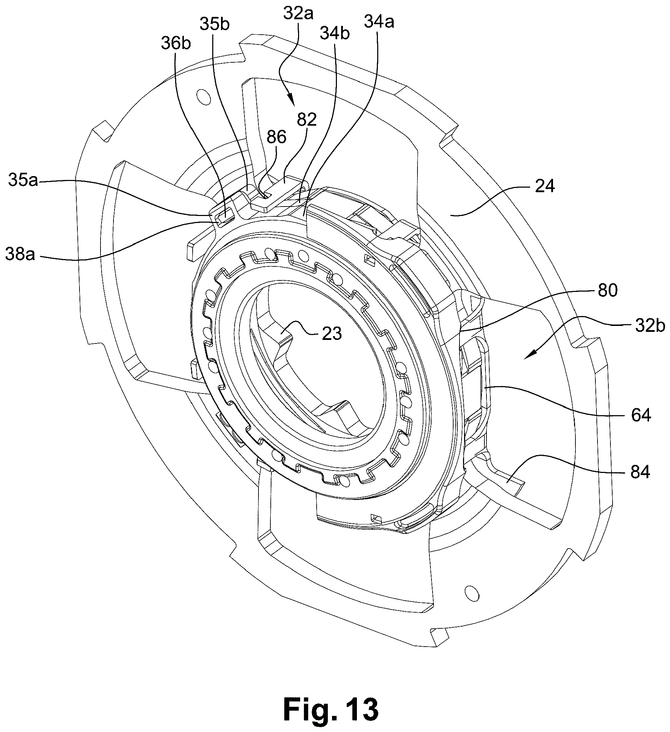

- la figure 13 est une vue en perspective et avec arrachage partiel d'une partie du dispositif,

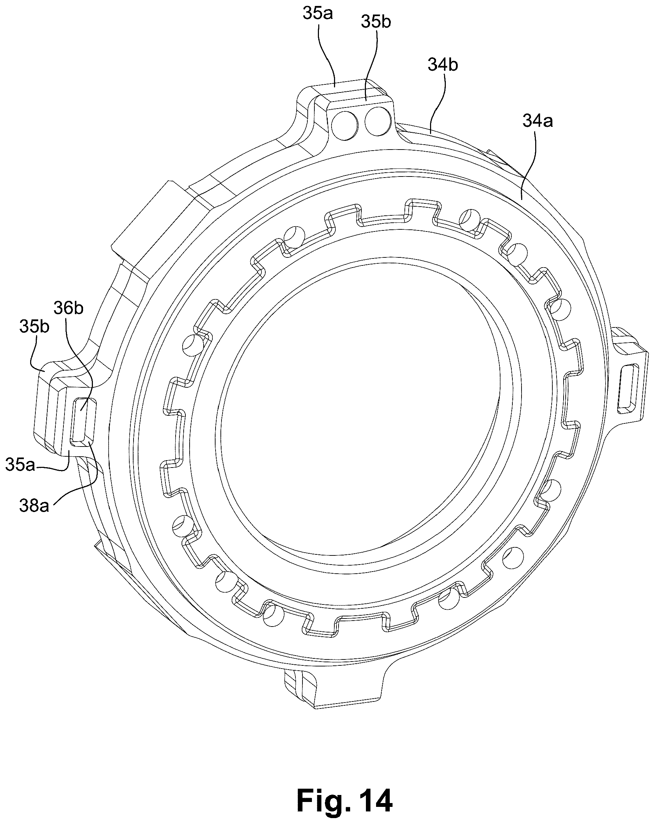

- la figure 14 est une vue en perspective du pré-amortisseur du dispositif,
- la figure 15 est une vue de face d'une partie du dispositif,

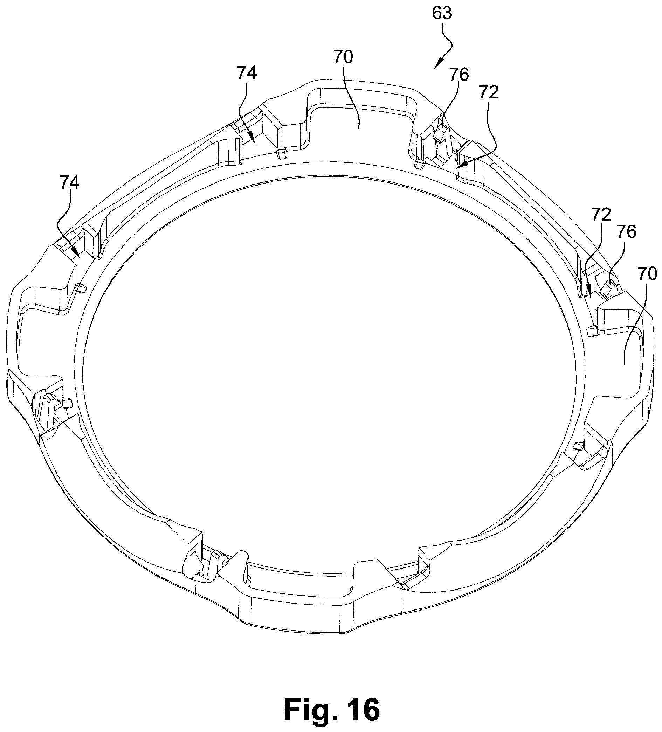

- la figure 16 est vue en perspective de la rondelle d'application.

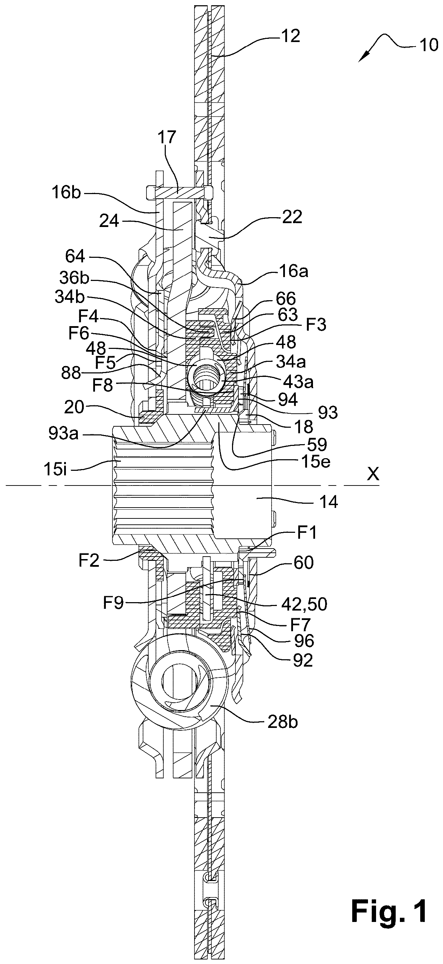

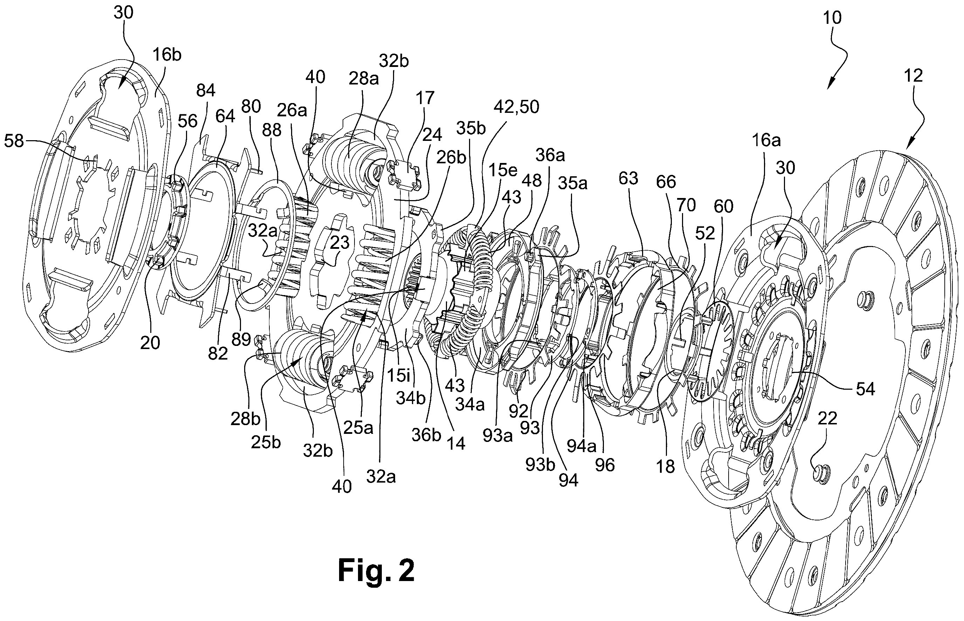

Les figures 1 et 2 représentent un dispositif de transmission de couple 10 appartenant à un dispositif d'embrayage 10, tel qu'un embrayage à friction, notamment pour véhicule automobile. Celui-ci s'étend selon un axe X et est destiné à transmettre un couple entre un volant moteur solidaire d'un arbre menant (non représenté), tel par exemple qu'un vilebrequin d'un moteur à combustion interne, et un arbre mené (non représenté), tel par exemple qu'un arbre d'entrée d'une boîte de vitesses.

Le dispositif d'embrayage 1 comporte un amortisseur primaire A1 et un amortisseur secondaire A2, également appelé pré-amortisseur, les deux amortisseurs étant agencés en série entre un disque de friction 12, destiné à être couplé en rotation à l'arbre menant, et un moyeu radialement interne 14, destiné à être couplé à l'arbre mené.

Plus particulièrement, le disque de friction 12 est destiné à être serré entre le volant moteur et un plateau de pression mobile (non représentés). Le moyeu 14 comporte des cannelures internes 15i s'étendant axialement, aptes à être couplées à des cannelures complémentaires de l'arbre mené.

L'amortisseur primaire comporte des première et seconde rondelles de guidage 16a, 16b, couplées en rotation par l'intermédiaire de colonnettes 17. Les rondelles de guidage 16a, 16b sont montées pivotantes autour du moyeu, par l'intermédiaire de paliers annulaires 18, 20. Le disque de friction 12 est fixé sur la première rondelle de guidage par l'intermédiaire de rivets 22.

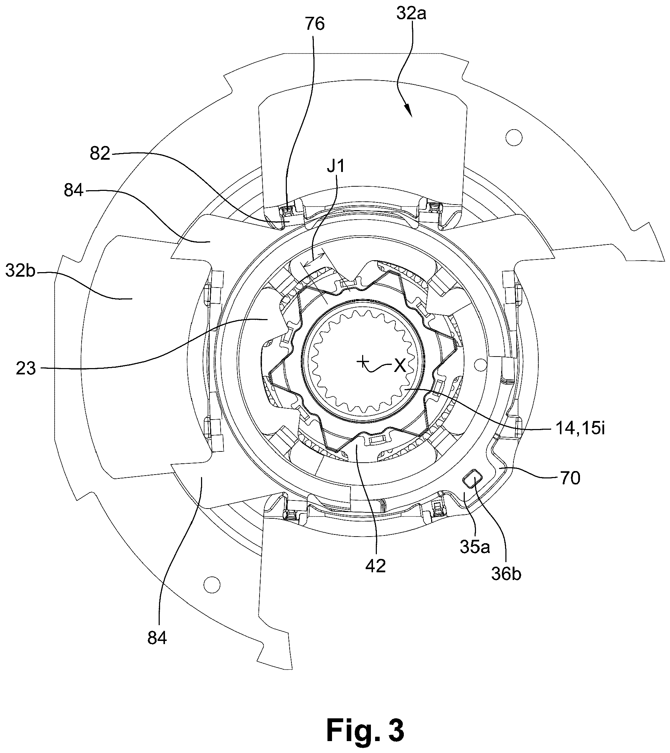

Un voile annulaire 24 est intercalé axialement entre les deux rondelles de guidage. Le voile annulaire comporte, en périphérie radialement interne, une denture 23 qui engrène, avec un jeu circonférentiel J1 déterminé (figure 3), avec une denture correspondante externe 15e de la périphérie externe du moyeu 14. Plus particulièrement, la denture interne 23 du voile 24 forme des saillies sensiblement radiales destinées à coopérer avec des évidements complémentaires externes du moyeu de manière à réaliser un engrènement.

L'amortisseur primaire A1 comporte, d'une part, des moyens d'amortissement 25a à activation dite immédiate, qui sont activés dès que débute le débattement angulaire entre les rondelles de guidage 16a, 16b et le voile 24, et, d'autre part, des moyens 25b d'amortissement à activation dite conditionnelle, qui sont activés ici lorsque le débattement angulaire entre les rondelles de guidage 16a, 16b et le voile annulaire 24 dépasse un angle seuil prédéterminé à partir d'une position de repos, dit angle seuil de l'amortisseur primaire A1.

Les moyens d'amortissement 25a, 25b comportent des organes élastiques à action circonférentielle, tels que des ressorts hélicoïdaux 26a, 26b, 28a, 28b de forte raideur, logés dans des fenêtres 30 des rondelles de guidage 16a, 16b et dans des fenêtres 32a et 32b du voile annulaire 24. Les organes élastiques 26a, 26b, 28a, 28b sont répartis en deux groupes.

Les moyens d'amortissement à activation immédiate 25a comportent des organes élastiques 26a, 26b d'un premier groupe, dits organes élastiques à activation immédiate, logés sans jeu circonférentiel dans les fenêtres 30 des rondelles de guidage 16a, 16b et dans les fenêtres 32a du voile annulaire 24. Ils participent à la transmission d'un couple de rotation entre les rondelles de guidage 16a, 16b et le voile 24 dès le début d'une rotation relative entre le disque de friction 12 fixé sur la première rondelle de guidage 16a de l'amortisseur A1 et le moyeu 14.

Les moyens d'amortissement à activation conditionnelle 25b comportent des organes élastiques 28a, 28b d'un second groupe, dits organes élastiques à activation conditionnelle, logés sans jeu circonférentiel dans les fenêtres 30 des rondelles de guidage 16a, 16b et avec un jeu circonférentiel prédéterminé dans les fenêtres 32b du voile annulaire 24. Les organes élastiques 28a, 28b du second groupe sont ici activés de façon décalée pour assurer la transmission d'un couple de rotation que lorsque le débattement angulaire entre les rondelles de guidage 16a, 16b et le voile annulaire 24 dépasse l'angle seuil de l'amortisseur primaire A1. On notera que cet angle seuil correspond au jeu circonférentiel entre les organes élastiques 28a, 28b et les fenêtres 32b correspondantes du voile 24.

Ainsi les organes élastiques 26a, 26b du premier groupe sont activés de façon immédiate pour transmettre le couple en permanence, tandis que les organes élastiques 28a, 28b du second groupe sont activés de façon conditionnelle pour transmettre le couple uniquement lorsque le débattement angulaire entre les rondelles de guidage 16a, 16b et le voile annulaire 24 est, ici, supérieur à l'angle seuil de l'amortisseur primaire A1. L'amortisseur secondaire ou pré-amortisseur A2 relie le voile annulaire 24 de l'amortisseur primaire A1 et le moyeu 14.

Le pré-amortisseur A2 comprend des première 34a et seconde 34b rondelles de guidage. Ces rondelles de guidage 34a, 34b sont solidarisées en rotation entre elles à l'aide de pattes 36a et 36b et l'ensemble de ces deux rondelles de guidage sont accrochées sur ce voile 24 à l'aide de pattes axiales 39 ménagées à la périphérie externe de la seconde rondelle de guidage 34b. Plus particulièrement, la périphérie externe de la première rondelle de guidage 34a comporte des plots 35a s'étendant radialement vers l'extérieur et la périphérie externe de la seconde rondelle de guidage 34b comporte des plots 35b s'étendant radialement vers l'extérieur. Les plots 35a comportent alternativement des pattes 36a et des évidements 38a tandis que les plots 35b comportent alternativement des pattes 36b et des évidements 38b. Les évidements 38a, 38b et les pattes 36a, 36b sont positionnées de telles façon que les pattes 36a soient engagées et maintenues par serrage ou montage en force dans les évidements 38b des plots 35b de la seconde rondelle 34b et que les pattes 36b soient engagées et maintenues par serrage ou montage en force dans les évidements 38a des plots 35a de la première rondelle 34a.

La deuxième rondelle de guidage 34b comporte en outre des pattes 39 s'étendant axialement depuis la périphérie radialement externe de ladite rondelle 34b, en direction du voile annulaire 24, à l'opposé de la première rondelle de guidage 34a. Chaque patte 39 est engagée et serrée dans une encoche 40 ménagée dans le bord radialement interne des ouvertures 32a, 32b du voile annulaire, de façon à solidariser les première 34a et seconde 34b rondelles de guidage au voile 24 de l'amortisseur primaire A1. Dans le mode de réalisation représenté, les rondelles de guidage 34a, 34b sont de préférence réalisées en matière plastique, laquelle est éventuellement renforcée de fibres.

Un voile annulaire auxiliaire 42 du pré-amortisseur A2 est intercalé axialement entre les deux rondelles de guidage 34a, 34b, co-axialement à celles-ci. Ce voile auxiliaire 42 est solidaire en rotation du moyeu 14, par exemple par engrènement sans jeu avec la denture périphérique externe 15e de ce moyeu 14. Le pré-amortisseur A2 comporte également des moyens d'amortissement 43 destinés à amortir des vibrations en provenance du moteur et aussi transmettre les faibles couples.

Les moyens d'amortissement 43 du pré-amortisseur A2 sont du type à activation immédiate, c'est-à-dire sont activés dès que débute le débattement angulaire entre les rondelles de guidage 34a, 34b et le voile 42 du pré-amortisseur A2. Selon une variante non représenté, les moyens d'amortissement 43 du pré-amortisseur A2 peuvent également comporter des moyens 43b d'amortissement à activation, dite conditionnelle, qui sont activés lorsque le débattement angulaire entre les rondelles de guidage 34a, 34b et le voile annulaire 42 du pré-amortisseur A2 dépasse un angle seuil prédéterminé à partir d'une position de repos, dit angle seuil de pré-amortisseur A2.

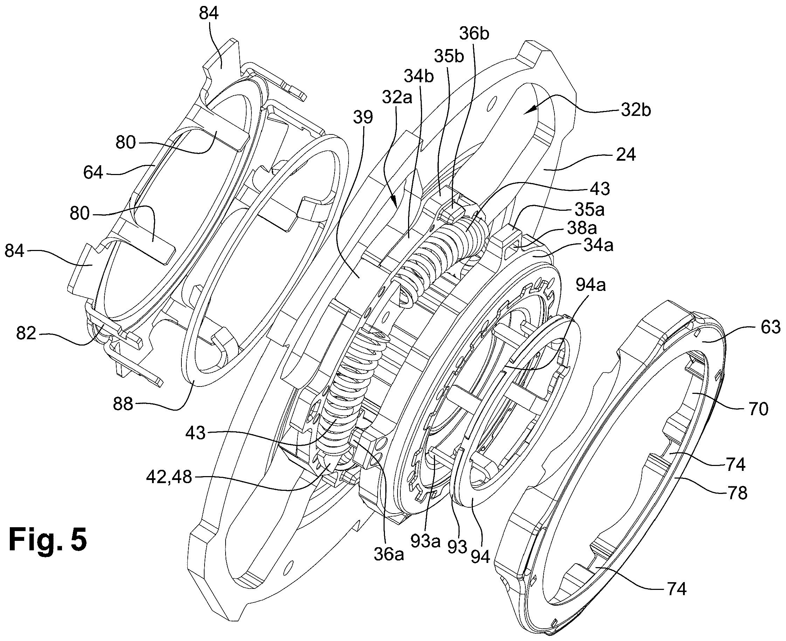

Les moyens d'amortissement 43 sont formés par des organes élastiques à action circonférentielle, tels que des ressorts hélicoïdaux de compression de raideur relativement faible, logés sans jeu circonférentiel dans des fenêtres 48 des rondelles de guidage 34a, 34b et entre des pattes 50 du voile annulaire 42 (voir figure 5). Les moyens d'amortissement 43 participent ainsi à la transmission d'un couple de rotation entre les rondelles de guidage 34a, 34b et le voile auxiliaire 42, dès le début d'une rotation relative entre ces rondelles de guidage 34a, 34b et ce voile 42.

Ainsi, l'ensemble des organes élastiques 26a, 26b, 28a, 28b, 43 de l'amortisseur primaire A1 et du pré-amortisseur A2 permet donc d'obtenir trois étages d'amortissement des vibrations et des irrégularités de couple.

En effet, les organes élastiques 43 du pré-amortisseur A2 déterminent un premier étage d'amortissement. Par ailleurs, en fin de course du pré-amortisseur A2, les organes élastiques 26a, 26b, 28a, 28b de l'amortisseur primaire A1 déterminent des deuxième et troisième étages d'amortissement selon qu'ils sont montés sans ou avec jeu circonférentiel dans leurs fenêtres correspondantes.

Le palier 18 est solidarisé en rotation avec la première rondelle de guidage 16a de l'amortisseur primaire A1 à l'aide de moyens classiques, par exemple des doigts axiaux 52 coopérant avec un contour interne cranté complémentaire 54 de la rondelle de guidage 16a.

Le palier 20, participant au centrage du moyeu 14, est solidarisé en rotation avec la rondelle de guidage 16b à l'aide de moyens classiques, par exemple des doigts 56 coopérant avec un contour cranté complémentaire 58 de la rondelle de guidage 16b.

Le palier 18 et un épaulement 59 du moyeu 14 forment deux surfaces de frottement radiales complémentaires F1 destinées à venir en appui l'une sur l'autre. Par ailleurs, le palier 20 et le moyeu 14 présentent deux surfaces de frottement complémentaires tronconiques F2 (figure 1) destinées à venir en appui l'une sur l'autre.

Les surfaces de frottement F1, F2 sont sollicitées élastiquement en contact mutuel par une première rondelle élastique 60 de compression axiale en appui entre la première rondelle de guidage 16a de l'amortisseur primaire A1 et le palier 18.

La rondelle élastique 60, de préférence en acier à ressort, est munie d'encoches coopérant avec les doigts 52 du palier 18 de manière à réaliser un couplage en rotation, lesdites pattes 52 étant également solidarisées en rotation avec la première rondelle de guidage 16a.

Dans le mode de réalisation représenté, les paliers 18 et 20 sont en matière plastique, éventuellement renforcée de fibres, et exercent de préférence un frottement relativement « doux » sur le moyeu 14.

Le dispositif comporte en outre une rondelle dite d'application 63, une rondelle de frottement à hystérésis variable 64 et une deuxième rondelle élastique 66.

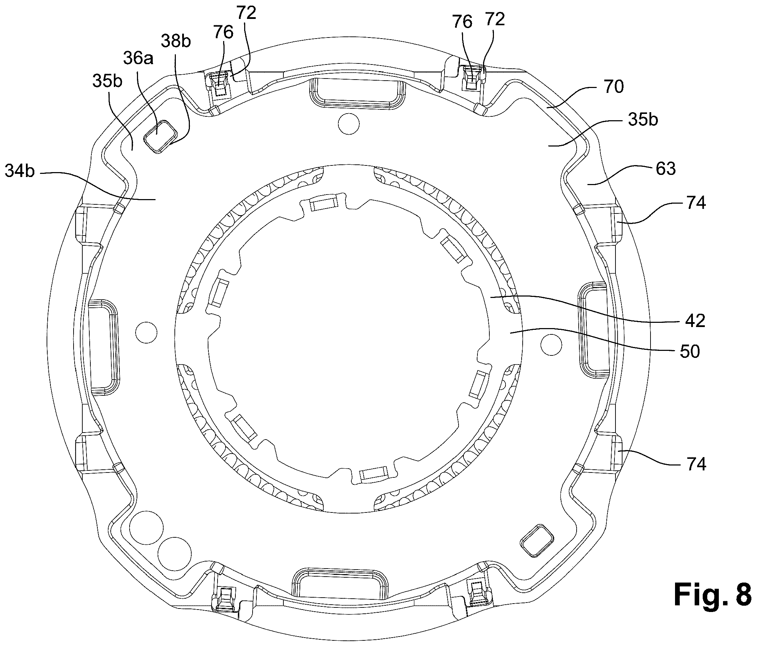

La rondelle d'application 63 est réalisée par exemple en matière plastique, éventuellement renforcée de fibres. Ladite rondelle 63 comporte des logements 70, ici au nombre de quatre, dans lesquels sont engagées, avec un jeu angulaire, les plots 35a de la première rondelle de guidage 34a du pré-amortisseur A2, comme cela est visible aux figures 8,15 et 3.

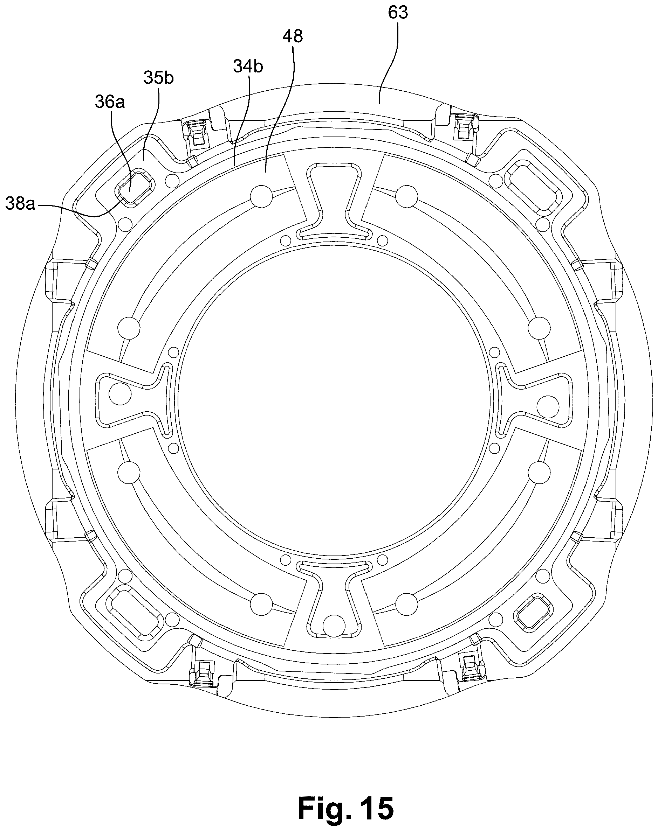

Le jeu angulaire est par exemple compris entre 2° et 6°, par exemple de l'ordre de 3° dans un sens de rotation dit direct, et est par exemple compris entre 2°et 8°, par exemple de l'or dre de 5°, dans un sens de rotation opposé, dit sens rétro, par rapport à une position de repos dans laquelle aucun couple n'est transmis au travers du dispositif. La position de repos est illustrée aux figures 8 et 15 notamment.

On rappelle que le sens direct correspond au cas de fonctionnement dans lequel du couple est transmis des rondelles de guidage 16a, 16b vers le moyeu 14. Dans certaines phases de fonctionnement, par exemple lorsque l'utilisateur retire brusquement son pied de l'accélérateur, un couple résistant est transmis du moyeu 14 vers les rondelles de guidage 16a, 16b, ce qui peut provoquer une rotation dans le sens rétro.

La rondelle d'application 63 comporte en outre des évidements 72, 74, ici au nombre de huit, dont la fonction sera mieux détaillée après. Quatre de ces évidements, à savoir les évidements référencés 72, comportent des moyens d'encliquetage 76 se présentant sous la forme de crochets ou d'ergots.

La rondelle d'application 63 comporte en outre une surface de frottement annulaire 78, s'étendant radialement, tournée vers la première rondelle de guidage 16a et opposée à la rondelle d'hystérésis variable 64.

La deuxième rondelle élastique 66 est montée en appui entre la première rondelle de guidage 16a de l'amortisseur primaire A1 et la surface radiale 78 de la rondelle d'application 63. Selon une forme de réalisation non représentée, la surface de frottement annulaire 78 comporte une partie métallique, par exemple un insert annulaire métallique, fixe par rapport à la rondelle d'application 63, permettant de réduire l'usure de la rondelle d'application 63 en fonctionnement.

La rondelle élastique 66 est de préférence en acier à ressort et est solidarisée en rotation avec la première rondelle de guidage 16a de l'amortisseur primaire A1 à l'aide de moyens classiques, par exemple par coopération de pattes et encoches complémentaires.

La rondelle d'hystérésis variable 64 est réalisée par exemple à partir d'une tôle métallique, et comporte une partie annulaire sensiblement radiale, à partir de laquelle huit pattes 80, 82 s'étendent axialement en direction de la rondelle d'application 63 et à partir de laquelle quatre pattes 84 s'étendent radialement vers l'extérieur. Les pattes 82 comportent des encoches 86. Les pattes 80 sont engagées dans les évidements 74 et les pattes 82 sont engagées dans les évidements 72 de sorte que les crochets 76 viennent s'encliqueter dans les encoches 86. Les rondelles 63, 64 sont ainsi fixées par encliquetage l'une à l'autre. Les ressorts 25b appartenant aux moyens d'amortissement à activation conditionnelle sont logés avec jeu entre les pattes 84.

On notera que la rondelle d'hystérésis variable 64 a une structure relativement simple et robuste en ce qu'elle est dépourvue de rebords en forme de coin, de sorte que sa fabrication est relativement aisée.

Une rondelle d'appui 88, réalisée par exemple en métal, est intercalée axialement entre la partie annulaire de la rondelle d'hystérésis variable 64 et la périphérie interne du voile annulaire 24.

La deuxième rondelle élastique 66 en acier et la surface 78 de la rondelle d'application 63 forment deux surfaces de frottement complémentaires radiales F3 (figure 1), destinées à venir en appui l'une sur l'autre de façon à créer un frottement mixte de type plastique/acier.

Par ailleurs, la rondelle d'hystérésis variable 64, en métal, et la rondelle de guidage 16b, également en métal, forment deux surfaces de frottement radiales complémentaires F4 (figure 1), destinées à venir en appui l'une sur l'autre.

En outre, la rondelle d'hystérésis variable 64 et la rondelle d'appui 88 forment deux surfaces de frottement radiales complémentaires F5 (figure 1) destinées à venir en appui l'une sur l'autre.

De plus, la rondelle d'appui 88 et le voile 24 forment deux surfaces de frottement radiales complémentaires F6 (figure 1), destinées à venir en appui l'une sur l'autre. On notera que la rondelle 88 est rendue solidaire en rotation de la rondelle de guidage 16b, par l'intermédiaire de pattes 89 montées dans des lumières de forme complémentaire de la rondelle de guidage 16b.

On notera également que l'ensemble comportant le voile 24, les rondelles de guidage 34a, 34b, les organes élastiques 43a, 43b, les rondelles 63, 64, et la rondelle 88, peut former un module pré-assemblé. On peut ainsi faciliter le montage du dispositif d'embrayage.

Une troisième rondelle élastique 92 est montée en appui entre la première rondelle de guidage 16a de l'amortisseur primaire A1 et la périphérie radiale externe de la première rondelle de guidage 34a du pré-amortisseur A2.

La troisième rondelle élastique 92 est solidarisée en rotation avec la rondelle de guidage 16A de l'amortisseur primaire A1 à l'aide de moyens classiques, par exemple par coopération de pattes radiales et encoches complémentaires.

La rondelle de guidage 34a du pré-amortisseur A2 et la troisième rondelle élastique 92 définissent deux surfaces de frottement radiales complémentaires F7 (figure 1), destinées à venir en appui l'une sur l'autre.

Le dispositif comporte de plus deux rondelles de frottement 93, 94 et une quatrième rondelle élastique 96 de compression axiale, de préférence en acier à ressort. Les rondelles 93, 94, 96 sont coaxiales.

La rondelle 93 est de préférence en acier et comporte une partie annulaire radiale à partir de laquelle des pattes 93a (figure 1) s'étendent axialement et sont engagées dans des encoches du voile 42 du pré-amortisseur A2 de manière à réaliser un couplage en rotation de la rondelle 93 et du voile 42. La partie annulaire de la rondelle 93 comporte en outre des encoches 93b à sa périphérie externe.

La rondelle 94 est réalisée de préférence en matière plastique, éventuellement renforcée de fibres. Elle comporte une partie annulaire radiale à partir de laquelle des plots 94a (figure 1) s'étendent axialement de façon à venir s'engager dans les encoches 93b de la rondelle 93. Les deux rondelles 93, 94 sont ainsi couplées en rotation l'une à l'autre.

La rondelle 93 et la quatrième rondelle de guidage 34a forment deux surfaces de frottement radiales complémentaires F8 (figure 1), destinées à venir en appui l'une sur l'autre.

En outre, la rondelle 94 et la rondelle élastique 96 forment deux surfaces de frottement radiales complémentaires F9 (figure 1), destinées à venir en appui l'une sur l'autre.

La quatrième rondelle élastique 96 est montée en appui entre la première rondelle de guidage 16a de l'amortisseur primaire A1 et la rondelle 94.

La quatrième rondelle élastique 96 est solidarisée en rotation avec la rondelle de guidage 16a de l'amortisseur primaire A1 à l'aide de moyens classiques, par exemple par coopération de pattes radiales et encoches complémentaires.

On décrira ci-dessous les principaux aspects du fonctionnement d'un tel dispositif d'embrayage 10.

Lorsque le moteur du véhicule automobile fonctionne à un régime de ralenti, l'amortisseur primaire A1 se comporte comme un organe rigide en raison de la raideur relativement élevée de ses organes élastiques 26a, 26b, 28a, 28b. Dans ce cas, le couple de rotation fourni par le vilebrequin du moteur est directement transmis du disque de friction 12 au voile annulaire 24 de l'amortisseur primaire A1.

Les rondelles de guidage 34a, 34b étant solidaires en rotation du voile 24 de l'amortisseur primaire A1, le couple de rotation est également transmis aux rondelles de guidage 34a, 34b.

Le couple de rotation est alors transmis de ces rondelles de guidage 34a, 34b au voile auxiliaire 42 du pré-amortisseur A2, et donc au moyeu 14, par l'intermédiaire des organes élastiques 43 qui sont alors comprimés.

Lors de cette première phase de fonctionnement, des frottements sont générés :
- entre le moyeu 14 et le palier 18 au niveau des surfaces de frottement F1,
- entre le moyeu 14 et le palier 20, au niveau des surfaces de frottement F2,
- entre la rondelle 93 et la rondelle de guidage 34a, au niveau des surfaces de frottement F8,
- entre la rondelle élastique 96 et la rondelle 94, au niveau des surfaces de frottement F9.

Les surfaces de frottement correspondantes sont maintenues en appui par les efforts axiaux de compression exercés par les rondelles élastiques 60, 96.

En poursuivant le débattement du voile 24 par rapport au moyeu 14, le jeu circonférentiel J1 entre la denture interne 23 du voile et la denture correspondante externe 15e du moyeu 14 est rattrapé, de sorte que le voile 24 et le moyeu 14 sont couplés en rotation.

A partir de cet instant débute une seconde phase de fonctionnement dans laquelle le pré-amortisseur A2 n'intervient plus dans la transmission du couple qui est directement transmis du voile 24 de l'amortisseur primaire A1 au moyeu 14.

Par conséquent, le couple est alors transmis du disque de friction 12 au moyeu 14 par l'intermédiaire de l'amortisseur primaire A1.

Dans cette seconde phase de fonctionnement, les vibrations et irrégularités du couple sont amorties dans un premier temps par les organes élastiques 26a, 26b à activation immédiate de l'amortisseur primaire A1 et par les frottements générés :
- entre le moyeu 14 et le palier 18 au niveau des surfaces de frottement F1,
- entre le moyeu 14 et le palier 20, au niveau des surfaces de frottement F2,
- entre le voile 24 et la rondelle 88, au niveau des surfaces de frottement F6,
- entre la rondelle élastique 92 et la rondelle de guidage 34a, au niveau des surfaces de frottement F7,
- entre la rondelle élastique 96 et la rondelle 94, au niveau des surfaces de frottement F9.

Les surfaces de frottement correspondantes sont alors maintenues en appui par les efforts axiaux de compression exercés par les rondelles élastiques 60, 92 et 96.

Dans cette troisième phase de fonctionnement, le débattement angulaire entre les rondelles de guidage 16a, 16b et le voile annulaire 24 de l'amortisseur primaire A1 dépasse l'angle seuil de l'amortisseur primaire A1. Dans ce cas, les vibrations et irrégularités sont amorties par les organes élastiques 26a, 26b à activation immédiate, par les organes élastiques à activation conditionnelle 28a, 28b de l'amortisseur primaire A1, et par les frottements générés :
- entre le moyeu 14 et le palier 18 au niveau des surfaces de frottement F1,
- entre le moyeu 14 et le palier 20, au niveau des surfaces de frottement F2,
- entre le voile 24 et la rondelle 88, au niveau des surfaces de frottement F6,
- entre la rondelle élastique 92 et la rondelle de guidage 34a, au niveau des surfaces de frottement F7,
- entre la rondelle élastique 96 et la rondelle 94, au niveau des surfaces de frottement F9.
- entre la rondelle d'hystérésis variable 64 et la rondelle de guidage 16b, au niveau des surfaces de frottement complémentaires F4,
- entre la rondelle d'hystérésis variable 64 et la rondelle 88, au niveau des surfaces de frottement complémentaires F5,
- entre la rondelle élastique 66 et la rondelle d'application 63, au niveau des surfaces de frottement complémentaires F3.

On notera que, dans cette troisième phase de fonctionnement, les plots 35a de la rondelle de guidage 34a viennent en appui sur les bords latéraux correspondants des logements 70, de manière à entraîner en rotation l'ensemble formé par la rondelle d'application 63 et par la rondelle d'hystérésis variable 64. On constate ainsi que, contrairement à l'art antérieur, l'entraînement desdites rondelles 63, 64 n'est pas réalisé à l'aide des pattes 84, qui sont relativement fragiles.

Par ailleurs, dans cette troisième phase de fonctionnement, les surfaces de frottement correspondantes sont maintenues en appui par les efforts axiaux de compression exercés par les rondelles élastiques 60, 66, 92 et 96.

On obtient ainsi trois étages d'amortissement, qui s'activent successivement en fonction du débattement angulaire entre le disque de friction 12 et le moyeu 14.

Les couples d'hystérésis générés lors de ces différentes phases sont différents, du fait notamment du nombre et de la nature des surfaces de frottement actives.

## Revendications

1. Dispositif de transmission de couple (10), notamment pour véhicule automobile, comportant un élément d'entrée de couple (12, 16a, 16b), destiné à être couplé à un vilebrequin et comprenant une première et une seconde rondelles de guidage (16a, 16b), un voile annulaire (24), un élément de sortie de couple comprenant un moyeu (14) destiné à être couplé à un arbre d'entrée d'une boîte de vitesses, le voile (24) étant apte à coulisser selon son axe (X) par rapport au moyeu (14), un amortisseur primaire (A1) agencé entre l'élément d'entrée de couple (12, 16a, 16b) et le voile (24) et un amortisseur secondaire ou pré-amortisseur (A2) agencé entre le voile (24) et l'élément de sortie de couple (14), des moyens de friction aptes à générer un couple d'hystérésis lors de la rotation du voile (24) par rapport à l'élément d'entrée de couple (12, 16a, 16b), lesdits moyens de friction comportant une rondelle d'application (63) montée axialement entre le voile (24) et la première rondelle de guidage (16a), une rondelle d'hystérésis variable (64) montée axialement entre la seconde rondelle de guidage (16b) et le voile (24), au moins un organe élastique tendant à repousser la rondelle d'application (63) et/ou le voile (24) en direction de la rondelle d'hystérésis variable (64) de manière à ce que ladite rondelle d'hystérésis variable (64) génère un couple d'hystérésis par frottement, la rondelle d'hystérésis variable (64) et la rondelle d'application (63) étant couplées en rotation l'une à l'autre, et en plus le pré-amortisseur (A2) comporte au moins une rondelle de guidage auxiliaire (34a, 34b) couplée en rotation avec le voile (24), **caractérise en ce que** ladite rondelle de guidage auxiliaire (34b) comportant une butée (35a) apte à coopérer avec une butée complémentaire (70) de la rondelle d'application (63) de manière à réaliser un couplage en rotation du voile (24), de la rondelle d'hystérésis variable (64) et de la rondelle d'application (63), lorsque le débattement du voile (24) par rapport à l'élément d'entrée de couple (12, 16a, 16b) dépasse une plage angulaire déterminée et de manière à découpler le voile (24), d'une part, et la rondelle d'hystérésis variable (64) et la rondelle d'application (63), d'autre part, lorsque ledit débattement est située dans ladite plage angulaire déterminée.

2. Dispositif (10) selon la revendication 1, **caractérisé en ce que** le pré-amortisseur (A2) comportent une première et une seconde rondelles de guidage auxiliaires (34a, 34b) couplées en rotation avec le voile annulaire (24), un voile annulaire auxiliaire (42) monté axialement entre les rondelles de guidage auxiliaires (34a, 34b) et couplé en rotation avec l'élément de sortie de couple (14), et au moins un organe élastique (43) monté entre les rondelles de guidage auxiliaires (34a, 34b) et le voile auxiliaire (42) et apte à s'opposer à la rotation des rondelles de guidage auxiliaires (34a, 34b) par rapport au voile auxiliaire (42).

3. Dispositif (10) selon la revendication 1 ou 2, **caractérisé en ce qu'**il comporte un premier palier (18) couplé en rotation à la première rondelle de guidage (16a) et un second palier (20) couplé en rotation à la seconde rondelle de guidage (16b), le moyeu étant maintenu en appui contre le premier palier (18) et contre le second palier (20).

4. Dispositif (10) selon la revendication 3, **caractérisé en ce que** le moyeu (14) est maintenu en appui contre le premier palier (18) et contre le second palier (20) par au moins une première rondelle élastique (60), montée entre l'une des rondelles de guidage (16a, 16b) et l'un desdits paliers (18, 20), et apte à exercer un effort axial tendant à plaquer ledit palier (18) sur le moyeu (14).

5. Dispositif (10) selon l'une des revendications 1 à 4, **caractérisé en ce qu'**il comporte une deuxième rondelle élastique (66) disposée axialement entre l'une des rondelles de guidage (16a, 16b) et la rondelle d'application (63), apte à exercer un effort axial sur la rondelle d'application (63).

6. Dispositif (10) selon l'une des revendications 3 à 5, **caractérisé en ce que** les première et seconde rondelles de guidage (16a, 16b) sont montées pivotantes autour du moyeu (14), par l'intermédiaire des premier et second paliers (18, 20),

7. Dispositif (10) selon l'une des revendications 1 à 6, **caractérisé en ce que** la rondelle d'application (63) comporte des logements (70) dans lesquels sont engagées, avec un jeu angulaire, des plots (35a) d'au moins une rondelle de guidage (34a) du pré-amortisseur (A2), de façon à former les butées complémentaires.

8. Dispositif (10) selon l'une des revendications 1 à 7, **caractérisé en ce qu'**une rondelle d'appui (88) est intercalée axialement entre la rondelle d'hystérésis variable (64) et la périphérie interne du voile annulaire (24).

9. Dispositif (10) selon la revendication 8, **caractérisé en ce que** la rondelle d'appui (88) est rendue solidaire en rotation de la seconde rondelle de guidage (16b), par l'intermédiaire de pattes (89) de la rondelle d'appui qui sont montées dans des lumières de forme complémentaire de la seconde rondelle de guidage (16b).

10. Dispositif (10) selon l'une des revendications 1 à 9, **caractérisé en ce qu'**une troisième rondelle élastique (92) est montée en appui entre la première rondelle de guidage (16a) de l'amortisseur primaire A1 et une rondelle de guidage (34a) du pré-amortisseur (A2).

11. Dispositif (10) selon la revendication 10, **caractérisé en ce que** la troisième rondelle élastique (92) est solidarisée en rotation avec la première rondelle de guidage (16A) de l'amortisseur primaire (A1).

12. Dispositif (10) selon la revendication 2 et selon l'une des revendications 3 à 11, **caractérisé en ce qu'**il comporte une première et une seconde rondelles de frottement (93, 94) couplées en rotation avec le voile auxiliaire du pré-amortisseur (A2).

13. Dispositif (10) selon la revendication 12, **caractérisé en ce qu'**une quatrième rondelle élastique (96) est montée en appui entre la première rondelle de guidage (16a) de l'amortisseur primaire (A1) et la seconde rondelle de frottement (94).

14. Dispositif (10) selon la revendication 13, **caractérisé en ce que** ladite quatrième rondelle élastique (96) est solidarisée en rotation avec la première rondelle de guidage (16a).

15. Dispositif (10) selon l'une des revendications 1 à 14, **caractérisé en ce que** l'amortisseur primaire (A1) comporte, d'une part, des moyens d'amortissement à activation dite immédiate, qui sont activés dès que débute le débattement angulaire entre les rondelles de guidage (16a, 16b) et le voile (24), et, d'autre part, des moyens d'amortissement à activation dite conditionnelle, qui sont activés ici lorsque le débattement angulaire entre les rondelles de guidage (16a, 16b) et le voile (24) dépasse un angle seuil prédéterminé à partir d'une position de repos, dit angle seuil de l'amortisseur primaire (A1).

## Patentansprüche

1. Vorrichtung zur Übertragung des Motordrehmoments (10), insbesondere für Kraftfahrzeuge, umfassend ein Drehmomenteingangselement (12, 16a, 16b), das dazu bestimmt ist, mit einer Kurbelwelle verbunden zu werden und eine erste und eine zweite Führungsscheibe (16a, 16b) aufweist, einen ringförmigen Flansch (24), ein Drehmomentausgangselement, das eine Nabe (14) aufweist, die dazu bestimmt ist, mit einer Eingangswelle eines Getriebes verbunden zu werden, wobei der Flansch (24) geeignet ist, entlang seiner Achse (X) relativ zu der Nabe (14) zu gleiten, einen primären Dämpfer (A1), der zwischen dem Drehmomenteingangselement (12, 16a, 16b) und dem Flansch (24) angeordnet ist, und einen sekundären Dämpfer oder Vordämpfer (A2), der zwischen dem Flansch (24) und dem Drehmomentausgangselement (14) angeordnet ist, Reibungsmittel, die geeignet sind, während der Drehung des Flansches (24) in Bezug auf das Drehmomenteingangselement (12, 16a, 16b) ein Hysteresedrehmoment zu erzeugen, wobei die Reibungsmittel eine Anwendungsscheibe (63), die axial zwischen dem Flansch (24) und der ersten Führungsscheibe (16a) befestigt ist, eine variable Hysteresescheibe (64) aufweisen, die axial zwischen der zweiten Führungsscheibe (16b) und dem Flansch (24) befestigt ist, wobei mindestens ein elastisches Element dazu neigt, die Anwendungsscheibe (63) und/oder den Flansch (24) in Richtung der variablen Hysteresescheibe (64) derart zu schieben, dass die variable Hysteresescheibe (64) durch Reibung ein Hysteresedrehmoment erzeugt, wobei die variable Hysteresescheibe (64) und die Anwendungsscheibe (63) drehbar miteinander verbunden sind, und ferner weist der Vordämpfer (A2) mindestens eine Hilfsführungsscheibe (34a, 34b) auf, die drehbar mit dem Flansch (24) verbunden ist, **dadurch gekennzeichnet, dass** die Hilfsführungsscheibe (34b) einen Anschlag (35a) aufweist, der geeignet ist, mit einem komplementären Anschlag (70) der Anwendungsscheibe (63) derart zusammenzuwirken, um eine Drehverbindung des Flansches (24), der variablen Hysteresescheibe (64) und der Anwendungsscheibe (63) zu erstellen, wenn die Auslenkung des Flansches (24) in Bezug auf das Drehmomenteingangselement (12, 16a, 16b) einen bestimmten Winkelbereich überschreitet und derart, um einerseits den Flansch (24) und andererseits die variable Hysteresescheibe (64) und die Anwendungsscheibe (63) zu entkoppeln, wenn sich die Auslenkung in dem bestimmten Winkelbereich befindet.

2. Vorrichtung (10) nach Anspruch 1, **dadurch gekennzeichnet, dass** der Vordämpfer (A2) mindestens eine erste und eine zweite Hilfsführungsscheibe (34a, 34b), die drehbar mit dem ringförmigen Flansch (24) verbunden sind, einen ringförmigen Hilfsflansch (42), der axial zwischen den Hilfsführungsscheiben (34a, 34b) befestigt ist und drehbar mit dem Drehmomentausgangselement (14) verbunden ist, und mindestens ein elastisches Organ (43) aufweist, das zwischen den Hilfsführungsscheiben (34a, 34b) und dem Hilfsflansch (42) befestigt ist und geeignet ist, der Drehung der Hilfsführungsscheiben (34a, 34b) in Bezug auf den Hilfsflansch (42) entgegenzuwirken.

3. Vorrichtung (10) nach Anspruch 1 oder 2, **dadurch gekennzeichnet, dass** sie ein erstes Lager (18), das drehbar mit der ersten Führungsscheibe (16a) verbunden ist, und ein zweites Lager (20) aufweist, das drehbar mit der zweiten Führungsscheibe (16b) verbunden ist, wobei die Nabe in Anlage gegen das erste Lager (18) und gegen das zweite Lager (20) gehalten ist.

4. Vorrichtung (10) nach Anspruch 3, **dadurch gekennzeichnet, dass** die Nabe (14) in Anlage gegen das erste Lager (18) und gegen das zweite Lager (20) durch mindestens eine erste Federscheibe (60), die zwischen einer der Führungsscheiben (16a, 16b) und einem der Lager (18, 20) befestigt ist, gehalten ist und geeignet ist, eine Axialkraft auszuüben, die dazu neigt, das Lager (18) auf die Nabe (14) zu drücken.

5. Vorrichtung (10) nach einem der Ansprüche 1 bis 4, **dadurch gekennzeichnet, dass** sie eine zweite Federscheibe (66) aufweist, die axial zwischen einer der Führungsscheiben (16a, 16b) und der Anwendungsscheibe (63) angeordnet ist, die geeignet ist, eine Axialkraft auf die Anwendungsscheibe (63) auszuüben.

6. Vorrichtung (10) nach einem der Ansprüche 3 bis 5, **dadurch gekennzeichnet, dass** die erste und zweite Führungsscheibe (16a, 16b) durch das erste und das zweite Lager (18, 20) schwenkbar um die Nabe (14) befestigt sind.

7. Vorrichtung (10) nach einem der Ansprüche 1 bis 6, **dadurch gekennzeichnet, dass** die Anwendungsscheibe (63) Aufnahmen (70) aufweist, in denen Noppen (35a) von mindestens einer Führungsscheibe (34a) des Vordämpfers (A2) mit Winkelspiel derart eingreifen, um die komplementären Anschläge zu bilden.

8. Vorrichtung (10) nach einem der Ansprüche 1 bis 7, **dadurch gekennzeichnet, dass** eine Stützscheibe (88) axial zwischen der variablen Hysteresescheibe (64) und dem Innenumfang des ringförmigen Flansches (24) angeordnet ist.

9. Vorrichtung (10) nach Anspruch 8, **dadurch gekennzeichnet, dass** die Stützscheibe (88) mit der zweiten Führungsscheibe (16b) durch Laschen (89) der Stützscheibe drehfest verbunden ist, die in Öffnungen von komplementärer Form der zweiten Führungsscheibe (16b) befestigt sind.

10. Vorrichtung (10) nach einem der Ansprüche 1 bis 9, **dadurch gekennzeichnet, dass** eine dritte Federscheibe (92) in Anlage zwischen der ersten Führungsscheibe (16a) des primären Dämpfers A1 und einer Führungsscheibe (34a) des Vordämpfers (A2) befestigt ist.

11. Vorrichtung (10) nach Anspruch 10, **dadurch gekennzeichnet, dass** eine dritte Federscheibe (92) mit der ersten Führungsscheibe (16A) des primären Dämpfers (A1) drehfest verbunden ist.

12. Vorrichtung (10) nach Anspruch 2 und nach einem der Ansprüche 3 bis 11, **dadurch gekennzeichnet, dass** sie eine erste und eine zweite Reibscheibe (93, 94) aufweist, die drehbar mit dem Hilfsflansch des Vordämpfers (A2) verbunden sind.

13. Vorrichtung (10) nach Anspruch 12, **dadurch gekennzeichnet, dass** eine vierte Federscheibe (96) in Anlage zwischen der ersten Führungsscheibe (16a) des primären Dämpfers (A1) und der zweiten Reibscheibe (94) befestigt ist.

14. Vorrichtung (10) nach Anspruch 13, **dadurch gekennzeichnet, dass** die vierte Federscheibe (96) mit der ersten Führungsscheibe (16a) drehfest verbunden ist.

15. Vorrichtung (10) nach einem der Ansprüche 1 bis 14, **dadurch gekennzeichnet, dass** der primäre Dämpfer (A1) einerseits Dämpfungsmittel mit sogenannter unmittelbarer Aktivierung, die aktiviert werden, sobald die Winkelauslenkung zwischen den Führungsscheiben (16a, 16b) und dem Flansch (24) beginnt, und andererseits Dämpfungsmittel mit sogenannter bedingter Aktivierung aufweist, die hier aktiviert werden, wenn die Winkelauslenkung zwischen den Führungsscheiben (16a, 16b) und dem Flansch (24) einen vorbestimmten Schwellenwertwinkel ausgehend von einer Ruheposition, der Schwellenwertwinkel des primären Dämpfers (A1) genannt wird, überschreitet.

## Claims

1. Torque transmission device (10), notably for a motor vehicle, comprising a torque input element (12, 16a, 16b), intended to be coupled to a crankshaft and comprising a first and a second guiding washers (16a, 16b), an annular web (24), a torque output element comprising a hub (14) intended to be coupled to an input shaft of a gearbox, the web (24) being able to slide along its axis (X) relative to the hub (14), a primary damper (A1) arranged between the torque input element (12, 16a, 16b) and the web (24) and a secondary damper or pre-damper (A2) arranged between the web (24) and the torque output element (14), friction means suitable for generating a hysteresis torque upon the rotation of the web (24) relative to the torque input element (12, 16a, 16b), said friction means comprising an application washer (63) mounted axially between the web (24) and the first guiding washer (16a), a variable hysteresis washer (64) mounted axially between the second guiding washer (16b) and the web (24), at least one elastic member tending to push back the application washer (63) and/or the web (24) towards the variable hysteresis washer (64) so that said variable hysteresis washer (64) generates a hysteresis torque by friction, the variable hysteresis washer (64) and the application washer (63) being coupled in rotation to one another, and furthermore the pre-damper (A2) comprising at least one auxiliary guiding washer (34a, 34b) coupled in rotation with the web (24), **characterized in that** said auxiliary guiding washer (34b) comprises a bump stop (35a) suitable for cooperating with a complementary bump stop (70) of the application washer (63) so as to produce a rotational coupling of the web (24), of the variable hysteresis washer (64) and of the application washer (63), when the travel of the web (24) relative to the torque input element (12, 16a, 16b) exceeds a determined angular range and so as to decouple the web (24), on the one hand, and the variable hysteresis washer (64) and the application washer (63), on the other hand, when said travel lies within said determined angular range.

2. Device (10) according to Claim 1, **characterized in that** the pre-damper (A2) comprises a first and a second auxiliary guiding washers (34a, 34b) coupled in rotation with the annular web (24), an auxiliary annular web (42) mounted axially between the auxiliary guiding washers (34a, 34b) and coupled in rotation with the torque output element (14), and at least one elastic member (43) mounted between the auxiliary guiding washers (34a, 34b) and the auxiliary web (42) and suitable for opposing the rotation of the auxiliary guiding washers (34a, 34b) relative to the auxiliary web (42).

3. Device (10) according to Claim 1 or 2, **characterized in that** it comprises a first bearing (18) coupled in rotation to the first guiding washer (16a) and a second bearing (20) coupled in rotation to the second guiding washer (16b), the hub being held to bear against the first bearing (18) and against the second bearing (20).

4. Device (10) according to Claim 3, **characterized in that** the hub (14) is held to bear against the first bearing (18) and against the second bearing (20) by at least one first elastic washer (60), mounted between one of the guiding washers (16a, 16b) and one of said bearings (18, 20), and suitable for exerting an axial force tending to press said bearing (18) onto the hub (14) .

5. Device (10) according to one of Claims 1 to 4, **characterized in that** it comprises a second elastic washer (66) arranged axially between one of the guiding washers (16a, 16b) and the application washer (63), suitable for exerting an axial force on the application washer (63).

6. Device (10) according to one of Claims 3 to 5, **characterized in that** the first and second guiding washers (16a, 16b) are mounted to pivot about the hub (14), via the first and second bearings (18, 20).

7. Device (10) according to one of Claims 1 to 6, **characterized in that** the application washer (63) comprises housings (70) in which are engaged, with an angular play, bumps (35a) of at least one guiding washer (34a) of the pre-damper (A2), so as to form the complementary bump stops.

8. Device (10) according to one of Claims 1 to 7, **characterized in that** a bearing washer (88) is inserted axially between the variable hysteresis washer (64) and the inner periphery of the annular web (24).

9. Device (10) according to Claim 8, **characterized in that** the bearing washer (88) is secured in rotation to the second guiding washer (16b), via tabs (89) of the bearing washer which are mounted in openings of complementary form of the second guiding washer (16b).

10. Device (10) according to one of Claims 1 to 9, **characterized in that** a third elastic washer (92) is mounted to bear between the first guiding washer (16a) of the primary damper (A1) and a guiding washer (34a) of the pre-damper (A2).

11. Device (10) according to Claim 10, **characterized in that** the third elastic washer (92) is secured in rotation with the first guiding washer (16a) of the primary damper (A1).

12. Device (10) according to Claim 2 and according to one of Claims 3 to 11, **characterized in that** it comprises a first and a second friction washers (93, 94) coupled in rotation with the auxiliary web of the pre-damper (A2).

13. Device (10) according to Claim 12, **characterized in that** a fourth elastic washer (96) is mounted to bear between the first guiding washer (16a) of the primary damper (A1) and the second friction washer (94).

14. Device (10) according to Claim 13, **characterized in that** said fourth elastic washer (96) is secured in rotation with the first guiding washer (16a).

15. Device (10) according to one of Claims 1 to 14, **characterized in that** the primary damper (A1) comprises, on the one hand, damping means with so-called immediate activation, which are activated as soon as the angular travel begins between the guiding washers (16a, 16b) and the web (24), and, on the other hand, damping means with so-called conditional activation, which are activated here when the angular travel between the guiding washers (16a, 16b) and the web (24) exceeds a predetermined threshold angle from a position of rest, called threshold angle of the primary damper (A1).
